# EUROPÄISCHE PATENTSCHRIFT

(11) **EP 3 059 540 B1**
(45) Veröffentlichungstag und Bekanntmachung des Hinweises auf die Patenterteilung: **26.12.2018**
(21) Anmeldenummer: 15156060.4
(22) Anmeldetag: 23.02.2015
(51) Int. Cl.: F27D 19/00, F27B 17/02, A61C 13/20

(54) **DENTAL-BRENNOFEN UND VERFAHREN ZU DESSEN ANSTEUERUNG**
DENTAL FURNACE AND METHOD OF CONTROLLING THE SAME
FOUR DENTAIRE ET SON PROCÉDÉ DE COMMANDE

(43) Veröffentlichungstag der Anmeldung: 24.08.2016
(73) Patentinhaber: Vita Zahnfabrik H. Rauter GmbH & Co. KG, 79713 Bad Säckingen (DE)
(72) Erfinder: Rauh, Wolfgang, 79713 Bad Säckingen (DE); Hilgenfeld, Janett, 79713 Bad Säckingen (DE)
(74) Vertreter: dompatent von Kreisler Selting Werner - Partnerschaft von Patent- und Rechtsanwälten mbB

(56) Entgegenhaltungen:
- EP-A1- 2 550 928
- EP-A1- 2 829 831

## Beschreibung

Die Erfindung betrifft einen Dental-Brennofen und ein Verfahren zur Ansteuerung eines derartigen Dental-Brennofens. Insbesondere betrifft die Erfindung die Bestimmung der Feuchtigkeit von Brenngut in einem Dental-Brennofen.

Es ist bekannt, Zahnersatz durch das Schichten von keramischem Material in Pulverform herzustellen. Um die Pulvermaterialien verarbeiten zu können, werden sie auf einer Arbeitsplatte mit Flüssigkeit vermengt, um die entstehende Masse dann manuell mit geeigneten Werkzeugen auf ein Gerüst zu schichten. Damit enthält die so erstellte Dental-Arbeit einen gewissen Grad an Feuchtigkeit. Feuchtigkeit führt aber beim erforderlichen Brennen des Zahnersatzes im Dental-Brennofen zum Abplatzen des keramischen Materials (da die Feuchtigkeit verdampft, oberflächennahe Bereiche der Krone aber durch die Wärmeeinwirkung bereits geschmolzen und damit undurchlässig für Luft/Feuchtigkeit sind). In anderen Fällen kann die Feuchtigkeit zu einem milchigen Erscheinungsbild der gebrannten Arbeit führen, da kleine Blasen in der Keramik eingeschlossen sind. Daher werden keramische Arbeiten vor dem eigentlichen Brennprozess in Dentalöfen bei teilweise oder gänzlich geöffneter Brennkammer durch Einschalten der in der Brennkammer eingebauten Heizung vorgetrocknet. Dabei wird häufig der Grad der offenen Brennkammer für eine Variation der Vortrocken-Temperatur am Brenngut verwendet. Trotz allem ist der Vortrocknungsprozess ein ungeregelter Vorgang, bei dem das Brenngut zum einen sehr ineffizient beheizt wird (Wärme entweicht ungehindert in die Umgebung) und zum anderen starre Prozesszeiten eingehalten werden müssen, um einen angestrebten Trocknungsgrad des Brenngutes zu gewährleisten.

In EP-A-2 550 928 wird ein Verfahren zum Messen der Temperatur und/oder der Feuchtigkeit des Brenngutes durch Einsatz von Sensoren in der Brennkammer beschrieben. Diese Sensorik ist aufwändig und liefert dann, wenn mehrere sich gegenseitig abschattende Dental-Arbeiten gleichzeitig in den Dental-Brennofen eingesetzt sind, möglicherweise unvollständige Messwerte.

In EP-A-2 829 831 wird ein Verfahren zur Bestimmung der Feuchtigkeit in einem Dentalofen unter Verwendung vorhandener Sensoren beschrieben. Dabei werden ein Temperatursensor und ein Drucksensor eingesetzt. Die von dem Temperatursensor sowie dem Drucksensor ermittelten Daten werden dazu eingesetzt, das Vorliegen eines möglichen Fehlers eines Dentalofens besser zu detektieren.

Aufgabe der Erfindung ist es, bei einem Dental-Brennofen die Feuchtigkeit bzw. den Trocknungsgrad des Brennguts auf einfache Weise und zuverlässig erfassen zu können.

Zur Lösung dieser Aufgabe wird mit der Erfindung ein Dental-Brennofen vorgeschlagen, der versehen ist mit
- einer Brennkammer mit einer steuerbaren verschließbaren Zugangsöffnung,
- einer in Fluidverbindung mit der Brennkammer stehenden Entlüftungsleitung zur Entlüftung der Brennkammer,
- eine Heizeinheit zur Erhitzung der Brennkammer während eines Brennprozesses und/oder eines Vortrocknungsprozesses zur Vortrocknung von Brenngut vor der Durchführung eines Brennprozesses und
- einer Ansteuereinheit zur Ansteuerung der Heizeinheit und der Zugangsöffnung.

Bei diesem Dental-Brennofen ist erfindungsgemäß vorgesehen,
- dass in der Entlüftungsleitung mindestens ein Feuchtigkeitssensor zur Erfassung der Feuchtigkeit der Luft in der Entlüftungsleitung angeordnet ist und
- dass der mindestens eine Feuchtigkeitssensor mit der Ansteuereinheit verbunden ist,
- wobei die Heizeinheit und die Zugangsöffnung zur Durchführung eines Brennprozesses und/oder eines Vortrocknungsprozesses von der Ansteuereinheit in Abhängigkeit von dem Signal des mindestens einen Feuchtigkeitssensors ansteuerbar sind.

Ferner wird mit der Erfindung zur Lösung der obigen Aufgabe ein Verfahren zur Steuerung eines derartigen Dental-Brennofens vorgeschlagen, wobei bei dem Verfahren
- bei zumindest teilweise geöffneter Zugangsöffnung und Entlüftung der Brennkammer die Feuchtigkeit und gegebenenfalls die Temperatur der Luft in der Entlüftungsleitung erfasst und in Abhängigkeit davon die Heizeinheit angesteuert und gegebenenfalls der Öffnungsgrad der Zugangsöffnung beeinflusst wird, und zwar zur Durchführung eines Vortrocknungsprozesses, und/oder
- bei geschlossener Zugangsöffnung die Feuchtigkeit und gegebenenfalls die Temperatur der Luft in der Entlüftungsleitung erfasst und in Abhängigkeit davon die Heizeinheit zur Durchführung eines Brennprozesses angesteuert wird.

Der erfindungsgemäße Dental-Brennofen weist in an sich bekannter Weise eine Brennkammer mit einer automatisch verschließbaren Zugangsöffnung auf. Mit der Brennkammer in Fluidverbindung steht eine Entlüftungs- bzw. Vakuumleitung zur Entlüftung/Evakuierung der Brennkammer. Die Brennkammer ist mit einer Heizeinheit ausgestattet zur Vorerwärmung bzw. Erhitzung von Brenngut, wie es ebenfalls an sich bei Dental-Brennöfen üblich ist. Über eine Ansteuereinheit lässt sich sowohl die Heizeinheit als auch die Zugangsöffnung der Brennkammer ansteuern.

Erfindungsgemäß befindet sich nun in der Entlüftungs- bzw. Vakuumleitung mindestens ein Feuchtigkeitssensor. Mit Hilfe dieses Feuchtigkeitssensors kann die Feuchtigkeit der aus der Brennkammer angesaugten Luft erfasst werden. Dies ist vor allem während der Vortrocknungsphase von Interesse, da durch die messtechnische Erfassung der Feuchtigkeit ermittelt werden kann, wann das Brenngut einen derart hohen Trocknungsgrad aufweist, dass beim anschließenden Brennprozess keine Schäden am Brenngut aufgrund von noch im Brenngut befindlicher Restfeuchte entstehen. Während der Detektion der Feuchtigkeit ist die Zugangsöffnung zweckmäßigerweise zumindest noch teilweise offen. Mit Beginn des Evakuierungsprozesses muss die Zugangsöffnung dann allerdings verschlossen sein.

Grundlage der vorliegenden Erfindung ist also die Verwendung mindestens einer Sensorik in der Entlüftungs-/Vakuumleitung des Dental-Brennofens, über die die Brennkammer evakuiert wird. Mit dieser Sensorik wird die relative Feuchtigkeit der mit Hilfe einer angeschlossenen Vakuumpumpe aus der Brennkammer gesaugten Luft gemessen. Insbesondere sind hierbei kombinierte oder aber getrennte Sensoren zur Erfassung der Luftfeuchte und der Temperatur denkbar. Zur Kompensation der Umgebungsfeuchte kann ein weiterer Sensor innerhalb des Ofengehäuses oder gänzlich außerhalb des Dental-Brennofens verwendet werden, so dass sich als Maß für die Feuchtigkeit des Brennguts die Differenz bzw. das Verhältnis zwischen der Luftfeuchte der Umgebungsluft und der Feuchte der aus der Brennkammer evakuierten Luft ergibt. Durch diesen weiteren Feuchtigkeitssensor wird ein Referenzwert für die Feuchtigkeit der Umgebungsluft geliefert. Dies fließt dann in die Berechnung der Restfeuchte des Brennguts, die wiederum aus der Feuchtigkeit der aus der Brennkammer herausgeleiteten Luft abgeleitet wird, ein. Um die relative Feuchte der Umgebungsluft und derjenigen der evakuierten Luft vergleichbar zu machen, werden die Temperaturen der beiden Gase (aus Brennkammer angesaugter Luft und Umgebungsluft) gemessen und eine entsprechende Korrekturberechnung durchgeführt.

Die Erfindung ermöglicht es, einerseits den Trocknungszustand bzw. -grad des in der Brennkammer befindlichen Brenngutes zu ermitteln; andererseits ist es mit der Erfindung auch möglich, die Feuchte in der Brennkammer, z.B. nach Nichtbenutzung des Dental-Brennofens, zu bestimmen und ggf. einen entsprechenden Trocknungsbrand anzustoßen. Die erfindungsgemäße Bestimmung der Feuchtigkeit des Brenngutes wird z.B. beim Vortrocknen des Brenngutes bei eingeschalteter Vakuumpumpe durchgeführt, wobei die Brennkammer ganz oder teilweise geschlossen ist. Wichtig ist die Erzeugung eines Luftstroms, der die vom Brenngut aufgrund der Wärmeentwicklung austretende Feuchtigkeit zu der in der Vakuumleitung befindlichen Sensorik transportiert.

In vorteilhafter Ausgestaltung der Erfindung kann mittels eines weiteren Feuchtigkeitssensors die Feuchtigkeit der Umgebungsluft außerhalb der Brennkammer und der Entlüftungs- bzw. Vakuumleitung ermittelt werden.

Es kann ferner von Vorteil sein, wenn in der Entlüftungsleitung mindestens ein Temperatursensor angeordnet ist, der mit der Ansteuereinheit verbunden ist, und wenn die Heizeinheit zur Durchführung eines Brennprozesses und/oder eines Vortrocknungsprozesses von der Ansteuereinheit in Abhängigkeit von den Signalen des jeweils mindestens einen Feuchtigkeitssensors beziehungsweise Temperatursensors ansteuerbar ist.

Wie bereits oben kurz erwähnt, ist es ferner von Vorteil, wenn die Ansteuereinheit die Zugangsöffnung während eines Vortrocknungsprozesses in Abhängigkeit von der von dem mindestens einen Feuchtigkeitssensor gemessenen Feuchtigkeit der Luft in der Entlüftungsleitung in einem vollständig geschlossenen oder teilweise offenen Zustand hält und/oder in einen solchen Zustand überführt.

Nachdem der Vortrocknungsprozess abgeschlossen ist, was anhand des Messwerts des mindestens einen Feuchtigkeitssensors, der in der Entlüftungsleitung angeordnet ist, erkannt wird, steuert die Ansteuereinheit die Heizeinheit des Dental-Brennofens zur Durchführung eines Brennprozesses entsprechend vorgegebener Brennprozessparameter an.

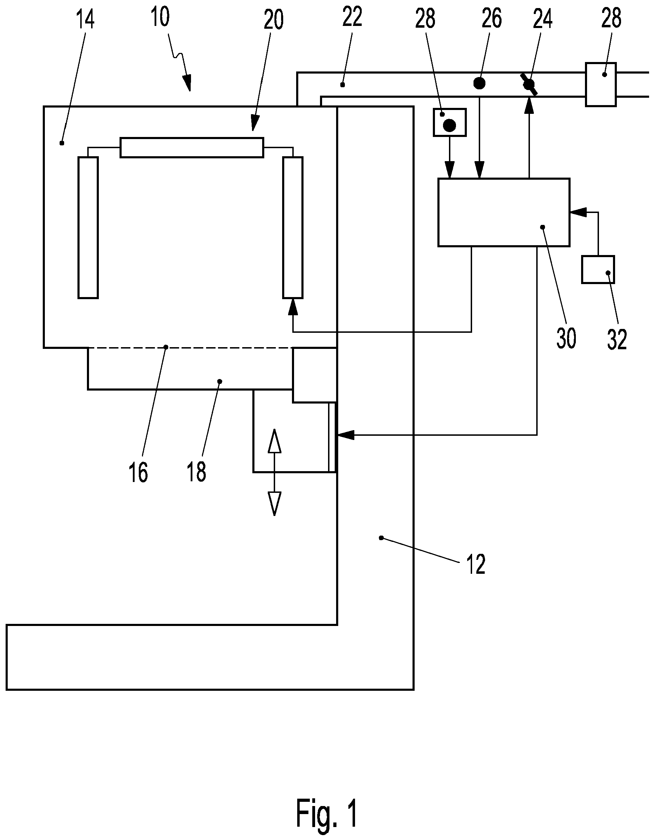

Anhand der Zeichnung wird nachfolgend ein Ausführungsbeispiel der Erfindung beschrieben.

In der Zeichnung ist schematisch ein Dental-Brennofen 10 gezeigt, der ein Gestell 12 mit einer Brennkammer 14 aufweist, die in diesem Ausführungsbeispiel eine unterseitige Zugangsöffnung 16 aufweist. Die Zugangsöffnung 16 wird mittels einer am Gestell 12 vertikal verfahrbaren Verschlussplatte 18 verschlossen bzw. geöffnet. Andere Ausgestaltungen von Öffnungsvorrichtungen für Dental-Brennöfen sind zur Realisierung der Erfindung ebenfalls verwendbar.

Innerhalb der Brennkammer 14 befindet sich eine Heizeinheit 20, mittels derer nicht dargestelltes Brenngut durch beispielsweise Strahlungswärme erhitzt wird.

Aus der Brennkammer 14 heraus führt eine Entlüftungs- bzw. Vakuumleitung 22, die mittels eines steuerbaren Verschlusses 24 wahlweise verschlossen werden kann. Ein derartiger Verschluss 24 bzw. ein entsprechendes Verschlussventil muss aber nicht notwendigerweise Bestandteil der Entlüftungsleitung 22 sein.

Erfindungsgemäß ist nun in der Entlüftungsleitung 22 ein Feuchtigkeitssensor 26 angeordnet, mittels dessen sich die relative oder, falls gewünscht, die absolute Feuchtigkeit der aus der Brennkammer 14 mittels einer beispielsweise Vakuumpumpe 28 abgesaugten Luft ermitteln lässt.

Außerhalb des Dental-Brennofens 10 und damit auch außerhalb der Entlüftungsleitung 22 befindet sich noch ein Temperatursensor zur Erfassung der Umgebungstemperatur.

Die Werte des Temperatursensors 30 und des Feuchtigkeitssensors 26 werden einer Ansteuereinheit 32 zugeführt, die einerseits die Heizeinheit 20 und andererseits unter anderem auch die Verschlussplatte 18 steuert.

Befindet sich nun zu brennendes Brenngut in der Brennkammer 14 des Dental-Brennofens 10, so ist es für den Brennprozess von Vorteil, wenn das Brenngut einen Mindesttrocknungsgrad aufweist. Zu diesem Zweck ist es bekannt, das Brenngut vor dem eigentlichen Brennprozess vorzutrocknen. Bisher ist man davon ausgegangen, dass es ausreichend ist, wenn man diesen Vortrocknungsprozess für eine bestimmte Zeit laufen lässt, um dann sicher gehen zu können, dass das Brenngut einen Mindesttrocknungsgrad aufweist. Besser allerdings ist es, wenn die Vortrocknungstemperatur des Brennguts bekannt wäre. Das ist allerdings aus den bereits oben erwähnten Gründen nicht immer möglich. Daher wird nun vorgeschlagen, die Feuchtigkeit der Luft, die während eines Vortrocknungsprozesses aus der Brennkammer 14 herausgeleitet wird, messtechnisch zu erfassen. In dieser Phase steuert die Ansteuereinheit 32 die Verschlussplatte 18 dergestalt an, dass die Zugangsöffnung 16 zumindest teilweise geöffnet ist. Unterschreitet während dieser Phase der vom Feuchtigkeitssensor 26 ermittelte Wert eine vorgebbare untere Grenze, so ist dies ein Zeichen dafür, dass das Brenngut einen vorgebbaren Mindesttrocknungsgrad erreicht hat. Mit Hilfe eines weiteren außerhalb des Dental-Brennofens 10 und damit auch außerhalb der Entlüftungsleitung 22 angeordneten Feuchtigkeitssensors 34 kann messtechnisch die Luftfeuchtigkeit außerhalb des Dental-Brennofens 10 berücksichtigt und der ermittelte Trocknungsgrad des Brennguts entsprechend korrigiert werden.

### Bezuaszeichenliste

- 10: Dental-Brennofen
- 12: Gestell
- 14: Brennkammer
- 16: Zugangsöffnung
- 18: Verschlussplatte
- 20: Heizeinheit
- 22: Entlüftungsleitung
- 24: Verschluss
- 26: Feuchtigkeitssensor der Entlüftungsleitung
- 28: Vakuumpumpe
- 30: Temperatursensor (für Umgebungsluft)
- 32: Ansteuereinheit
- 34: Feuchtigkeitssensor (für Umgebungsluft)

## Patentansprüche

1. Dental-Brennofen (10) mit
- einer Brennkammer (14) mit einer steuerbaren verschließbaren Zugangsöffnung (16),
- einer in Fluidverbindung mit der Brennkammer (14) stehenden Entlüftungsleitung (22) zur Entlüftung der Brennkammer (14),
- eine Heizeinheit (20) zur Erhitzung der Brennkammer (14) während eines Brennprozesses und/oder eines Vortrocknungsprozesses zur Vortrocknung von Brenngut vor der Durchführung eines Brennprozesses und
- einer Ansteuereinheit (32) zur Ansteuerung der Heizeinheit (20) und der Zugangsöffnung (16),
**dadurch gekennzeichnet,**
- **dass** in der Entlüftungsleitung (22) mindestens ein Feuchtigkeitssensor (26) zur Erfassung der Feuchtigkeit der Luft in der Entlüftungsleitung (22) angeordnet ist und
- **dass** der mindestens eine Feuchtigkeitssensor (26) mit der Ansteuereinheit (32) verbunden ist,
- wobei die Heizeinheit (20) und die Zugangsöffnung (16) zur Durchführung eines Brennprozesses und/oder eines Vortrocknungsprozesses von der Ansteuereinheit (32) in Abhängigkeit von dem Signal des mindestens einen Feuchtigkeitssensors (26) ansteuerbar sind.

2. Dental-Brennofen (10) nach Anspruch 1, **gekennzeichnet durch** mindestens einen weiteren Feuchtigkeitssensor (34) zur Ermittlung der Luftfeuchtigkeit außerhalb der Brennkammer (14) und der Entlüftungsleitung (22).

3. Dental-Brennofen (10) nach Anspruch 1 oder 2, **dadurch gekennzeichnet, dass** in der Entlüftungsleitung (22) mindestens ein Temperatursensor (30) angeordnet ist, der mit der Ansteuereinheit (32) verbunden ist, und dass die Heizeinheit (20) zur Durchführung eines Brennprozesses und/oder eines Vortrocknungsprozesses von der Ansteuereinheit (32) in Abhängigkeit von den Signalen des jeweils mindestens einen Feuchtigkeitssensors (26) beziehungsweise Temperatursensors (30) ansteuerbar ist.

4. Dental-Brennofen (10) nach einem der Ansprüche 1 bis 3, **dadurch gekennzeichnet, dass** die Ansteuereinheit (32) die Zugangsöffnung (16) während eines Vortrocknungsprozesses in Abhängigkeit von der von dem mindestens einen Feuchtigkeitssensor (26) gemessenen Feuchtigkeit der Luft in der Entlüftungsleitung (22) in einem vollständig geschlossenen oder teilweise offenen Zustand hält und/oder in einen solchen Zustand überführt.

5. Dental-Brennofen (10) nach einem der Ansprüche 1 bis 4, **dadurch gekennzeichnet, dass** die Ansteuereinheit (32) die Heizeinheit (20) zur Durchführung eines Brennprozesses in Abhängigkeit von dem Signal des mindestens einen Feuchtigkeitssensors (26) und des Signals des gegebenenfalls vorhandenen mindestens einen Temperatursensors (30) in der Entlüftungsleitung (22) ansteuert.

6. Dental- Brennofen (10) nach einem der Ansprüche 1 bis 5, **gekennzeichnet durch** eine Unterdruck- und insbesondere Vakuumpumpe (28) zur Entlüftung der Brennkammer (14).

7. Verfahren zur Steuerung eines Dental-Brennofens (10) nach einem der vorherigen Ansprüche, wobei bei dem Verfahren
- bei zumindest teilweise geöffneter Zugangsöffnung (16) und Entlüftung der Brennkammer (14) die Feuchtigkeit und gegebenenfalls die Temperatur der Luft in der Entlüftungsleitung(22) erfasst und in Abhängigkeit davon die Heizeinheit (20) angesteuert und gegebenenfalls der Öffnungsgrad der Zugangsöffnung (16) beeinflusst wird, und zwar zur Durchführung eines Vortrocknungsprozesses, und/oder
- bei geschlossener Zugangsöffnung (16) die Feuchtigkeit und gegebenenfalls die Temperatur der Luft in der Entlüftungsleitung (22) erfasst und in Abhängigkeit davon die Heizeinheit (20) zur Durchführung eines Brennprozesses angesteuert wird.

## Claims

1. Dental furnace (10) comprising
- a firing chamber (14) with a controllable closable access opening (16),
- a venting line (22) for venting the firing chamber (14), said line being in fluid communication with the firing chamber (14),
- a heating unit (20) for heating the firing chamber (14) during a firing process and/or a pre-drying process for pre-drying material to be fired before performing a firing process, and
- a control unit (32) for controlling the heating unit (20) and the access opening (16),
**characterized in**
- **that** at least one humidity sensor is arranged in the venting line (22) for sensing the humidity of the air in the venting line (22), and
- **that** the at least one humidity sensor (26) is connected to the control unit (32),
- wherein, for performing a firing process and/or a pre-drying process, the heating unit (20) and the access opening (16) are configured to be controlled by the control unit (32) in dependence on the signal of the at least one humidity sensor (26).

2. Dental furnace (10) of claim 1, **characterized by** at least one further humidity sensor (34) for determining the air humidity outside the firing chamber (14) and the venting line (22).

3. Dental furnace (10) of claim 1 or 2, **characterized in that** at least one temperature sensor (30) is arranged in the venting line (22), which is connected to the control unit (32), and **in that**, for performing a firing process and/or a pre-drying process, the heating unit (20) is configured to be controlled by the control unit (32) in dependence on the signal of the at least one humidity sensor (26) or the at least one temperature sensor (30), respectively.

4. Dental furnace (10) of one of claims 1 to 3, **characterized in that** the control unit (32) maintains the access opening (16) in a fully closed or partly open state and/or brings the same into such a state during a drying process, in dependence on the humidity of the air in the venting line (22) measured by the at least one humidity sensor (26).

5. Dental furnace (10) of one of claims 1 to 4, **characterized in that**, for performing a firing process, the control unit (32) controls the heating unit (20) in dependence on the signal of the at least one humidity sensor (26) and the signal of the at least one temperature sensor (30), if provided, in the venting line (22).

6. Dental furnace (10) of one of claims 1 to 5, **characterized by** a low pressure pump and in particular a vacuum pump (28) for venting the firing chamber (14).

7. Method for controlling a dental furnace (10) of one of the preceding claims, wherein in the method
- with the access opening (16) at least partly open and the firing chamber (14) being vented, the humidity and, possibly, the temperature of the air in the venting line (22) are sensed and the heating unit (20) is controlled in dependence thereon and, if necessary, the degree of opening of the access opening (16) is controlled, namely for performing a pre-drying process, and/or
- with the access opening (16) closed, the humidity and, possibly, the temperature of the air in the venting line (22) is sensed and the heating unit (20) is controlled in dependence thereon to perform a firing process.

## Revendications

1. Four dentaire (10) ayant
- une chambre de cuisson (14) avec une ouverture d'accès (16) adaptée pour être commandée et verrouillée,
- un conduit de ventilation (22) en communication fluidique avec la chambre de cuisson (14) pour la ventilation de la chambre de cuisson (14),
- une unité de chauffage (20) pour chauffer la chambre de cuisson (14) pendant un procédé de cuisson et/ou un procédé de pré-séchage pour présécher de la matière à cuir avant l'exécution d'un procédé de cuisson et
- une unité de commande (32) pour commander l'unité de chauffage (20) et l'ouverture d'accès (16),
**caractérisé**
- **en ce que**, dans le conduit de ventilation (22), au moins un capteur d'humidité (26) est disposé pour mesurer l'humidité de l'air dans le conduit de ventilation (22) et
- **en ce que** ledit au moins un capteur d'humidité (26) est relié à l'unité de commande (32),
- l'unité de chauffage (20) et l'ouverture d'accès (16) étant adaptées pour pouvoir être commandées par l'unité de commande (32), pour l'exécution d'un procédé de cuisson et/ou d'un procédé de pré-séchage, en fonction du signal dudit au moins un capteur d'humidité (26).

2. Four dentaire (10) selon la revendication 1, **caractérisé par** au moins un autre capteur d'humidité (34) pour déterminer l'humidité de l'air à l'extérieur de la chambre de cuisson (14) et du conduit de ventilation (22).

3. Four dentaire (10) selon la revendication 1 ou 2, **caractérisé en ce que**, dans le conduit de ventilation (22), au moins un capteur de température (30) est disposé qui est relié à l'unité de commande (32), et **en ce que** l'unité de chauffage (20) est adaptée pour pouvoir être commandée par l'unité de commande (32), pour l'exécution d'un procédé de cuisson et/ou d'un procédé de pré-séchage, en fonction des signaux dudit au moins un capteur d'humidité (26) ou respectivement capteur de température (30).

4. Four dentaire (10) selon l'une des revendications 1 à 3, **caractérisé en ce que**, pendant un procédé de pré-séchage, l'unité de commande (32) maintient l'ouverture d'accès (16), en fonction de l'humidité de l'air dans le conduit de ventilation (22), mesurée par ledit au moins un capteur d'humidité (26), dans un état entièrement fermé ou partiellement ouvert ou la rend dans un tel état.

5. Four dentaire (10) selon l'une des revendications 1 à 4, **caractérisé en ce que**, pour l'exécution d'un procédé de cuisson, l'unité de commande (32) commande l'unité de chauffage (20) en fonction du signal dudit au moins un capteur d'humidité (26) et du signal dudit au moins un capteur de température (30) éventuellement présent dans le conduit d'évacuation (22).

6. Four dentaire (10) selon l'une des revendications 1 à 5, **caractérisé par** une pompe à dépression, notamment une pompe à vide (28) pour l'évacuation de la chambre de cuisson (14).

7. Procédé pour commander un four dentaire (10) selon l'une des revendications précédentes, dans ce procédé
- avec une ouverture d'accès (16) au moins partiellement ouverte et pendant l'évacuation de la chambre de cuisson (14), l'humidité et, le cas échéant, la température de l'air dans le conduit d'évacuation (22) étant mesurées et, en fonction de celles-ci, l'unité de chauffage (20) étant commandée et, le cas échéant, le degré d'ouverture de l'ouverture d'accès (16) étant influencé, et cela pour l'exécution d'un procédé de pré-séchage, et/ou
- avec une ouverture d'accès (16) fermée, l'humidité et, le cas échéant, la température de l'air dans le conduit d'évacuation (22) étant mesurées et, en fonction de celles-ci, l'unité de chauffage (20) étant commandée pour l'exécution d'un procédé de cuisson.
